(19) Europäisches Patentamt
European Patent Office
Office européen des brevets

(11) EP 0 550 222 B1

## (12) EUROPEAN PATENT SPECIFICATION

(45) Date of publication and mention
of the grant of the patent:
**05.03.1997 Bulletin 1997/10**

(51) Int Cl.6: **F16D 48/02**, B60K 41/22,
B60K 41/24

(21) Application number: **92311595.0**

(22) Date of filing: **18.12.1992**

(54) **Touch point identification for automatic clutch controller**

Berührpunkt-Erkennung für Steuerungsgerät für automatische Kupplung

Détection du point de contact pour dispositif de commande d'un embrayage automatique

(84) Designated Contracting States:
**AT DE ES FR GB IT NL SE**

(30) Priority: **02.01.1992 US 815501**

(43) Date of publication of application:
**07.07.1993 Bulletin 1993/27**

(73) Proprietor: **EATON CORPORATION**
**Cleveland, Ohio 44114 (US)**

(72) Inventors:
• **Liu, Chia-Hsiang**
**Northville, Michigan 48167 (US)**
• **Slicker, James Melvin**
**Union Lake, Michigan 48085 (US)**

(74) Representative: **Douglas, John Andrew**
**Eaton House**
**Staines Road**
**Hounslow Middlesex TW4 5DX (GB)**

(56) References cited:
**EP-A- 0 244 096**          **EP-A- 0 385 629**
**FR-A- 2 645 805**          **GB-A- 2 080 909**
**GB-A- 2 190 454**

**Description**

Technical Field of the Invention

The technical field of this invention is that of automatic clutch controls, and more particularly the determination of the clutch position for initial torque transmission in an automatic clutch controller.

Background of the Invention

In recent years there has been a growing interest in increased automation in the control of the drive train of motor vehicles, and most especially in control of the drive train of large trucks. The use of automatic transmissions in passenger automobiles and light trucks is well known. The typical automatic transmission in such a vehicle employs a fluid torque converter and hydraulically actuated gears for selecting the final drive ratio between the engine shaft and the drive wheels. This gear selection is based upon engine speed, vehicle speed and the like. It is well known that such automatic transmissions reduce the effectiveness of the transmission of power from the engine to the drive shaft, with the consummate reduction in fuel economy and power as compared with the skilled operation of a manual transmission. Such hydraulic automatic transmissions have not achieved wide spread use in large motor trucks because of the reduction in efficiency of the operation of the vehicle.

One of the reasons for the loss of efficiency when employing a hydraulic automatic transmission is loss occurring in the fluid torque converter. A typical fluid torque converter exhibits slippage and consequent loss of torque and power in all modes. It is known in the art to provide lockup torque converters that provide a direct link between the input shaft and the output shaft of the transmission above certain engine speeds. This technique provides adequate torque transfer efficiency when engaged, however, this technique provides no gain in efficiency at lower speeds.

It has been proposed to eliminate the inefficiencies inherent in a hydraulic torque converter by substitution of an automatically actuated friction clutch. This substitution introduces another problem not exhibited in the use of the hydraulic torque converters. Friction clutches used exhibit considerable motion prior to initial clutch engagement. This point of initial clutch engagement is called the touch point. No torque can be transferred through the clutch for clutch engagement before the touch point. The clutch controller preferably uses the touch point as the zero position for its control algorithm. Since no controlled torque transfer can take place prior to the touch point, the clutch controller preferably rapidly advances the clutch to this point when controlling clutch engagement.

Thus it would be an advantage to provide automatic clutch actuation of a friction clutch that includes a reliable and automatic manner for determination of the clutch touch point. One such method is described in EP-A- 385 629, some of the features of which are described in the precharacterizing part of claims 1 and 10.

Summary of the Invention

This invention which is described in claims 1 and 10 provides automatic and reliable determination of the touch point of a clutch controlled by an automatic clutch actuation controller. This invention is employed in a combination including an engine, a friction clutch, a multi-speed transmission having a neutral position, at least one inertially-loaded traction wheel connected to the output of the multi-speed transmission, and an automatic clutch controller.

This invention determines the touch point while idling the engine, with the transmission in neutral and an inertial brake applied. This inertial brake is ordinarily used to slow the transmission input shaft to match speeds during up shifts. The braking torque of the inertial brake is about 5% of the idling torque of the engine.

The clutch actuation controller engages the clutch so that the measured transmission input speed matches a reference speed signal less than the idle speed. In the preferred embodiment the reference speed signal is between 40% and 60% of the idle speed. The clutch actuation controller preferably subtracts a filtered measured transmission input speed signal from a reference speed signal filtered to prevent application of a step function input. This error speed is used to control the degree of clutch engagement. This reliably provides the degree of clutch engagement at a small torque matching the braking torque.

This invention detects when the transmission input speed is within a predetermined amount of the reference speed signal. In the preferred embodiment this predetermined amount is 4% of the reference speed signal. Upon detection of these conditions, this invention determines the clutch touch point corresponding to the degree of clutch engagement. This degree of clutch engagement may be a clutch position signal or a clutch pressure signal produced by an existing sensor used in the automatic clutch control. If no measured clutch engagement signal is available, this degree of clutch engagement may be the clutch engagement signal used to control the degree of clutch engagement. The signal corresponding to the degree of clutch engagement is preferably low pass filtered. The touch point is set as the difference between this degree of clutch engagement for the small torque and a clutch touch point offset. This clutch touch point offset shifts the signal to take into account the difference in clutch engagement between that which provides the small torque to overcome the brake and that which first provides a non-zero torque.

Brief Description of the Drawings

These and other objects and aspects of the present invention will be described below in conjunction with the drawings in which:

FIGURE 1 illustrates a schematic view of the vehicle drive train including the clutch actuation controller of the present invention;
FIGURE 2 illustrates the typical relationship between clutch engagement and clutch torque;
FIGURE 3 illustrates schematically an embodiment of the clutch touch point determination; and
FIGURE 4 illustrates an alternative embodiment of the clutch touch point determination.

Detailed Description of the Preferred Embodiments

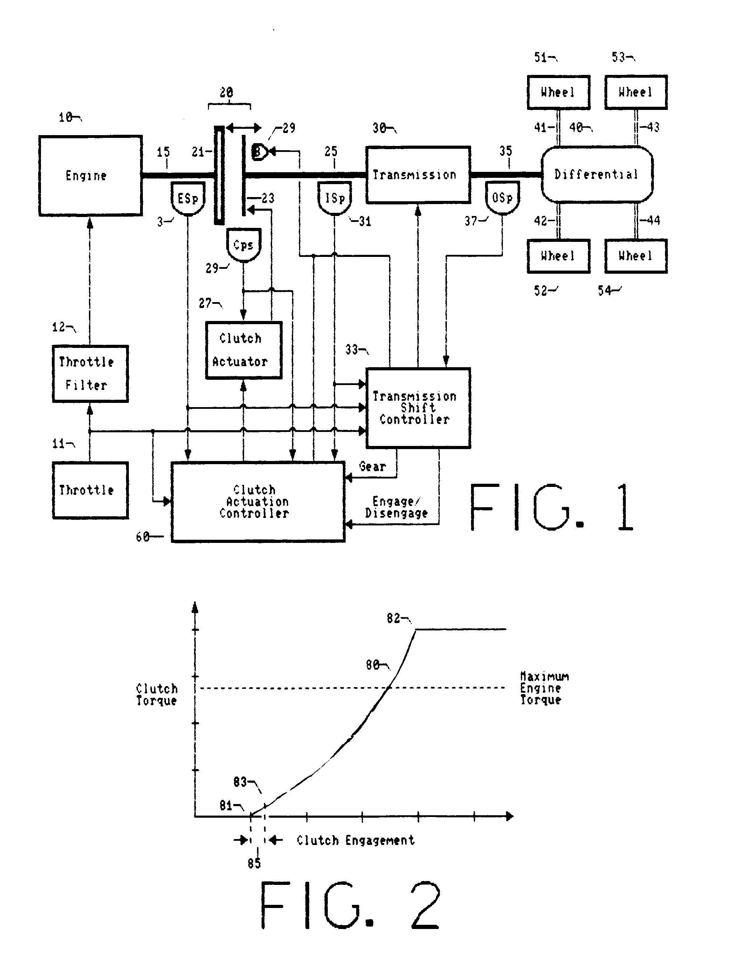

Figure 1 illustrates in schematic form the drive train of a motor vehicle including the automatic clutch controller of the present invention. The motor vehicle includes engine 10 as a source of motive power. For a large truck of the type to which the present invention is most applicable, engine 10 would be a diesel internal combustion engine. Throttle 11, which is typically a foot operated pedal, controls operation of engine 10 via throttle filter 12. Throttle filter 12 filters the throttle signal supplied to engine 10 by supplying a ramped throttle signal upon receipt of a step throttle increase via throttle 11. Engine 10 produces torque on engine shaft 15. Engine speed sensor 13 detects the rotational velocity of engine shaft 15. The actual site of rotational velocity detection by engine speed sensor may be at the engine flywheel. Engine speed sensor 13 is preferably a multitooth wheel whose tooth rotation is detected by a magnetic sensor.

Friction clutch 20 includes fixed plate 21 and movable plate 23 that are capable of full or partial engagement. Fixed plate 21 may be embodied by the engine flywheel. Friction clutch 20 couples torque from engine shaft 15 to transmission input shaft 25 corresponding to the degree of engagement between fixed plate 21 and movable plate 23. Note that while Figure 1 illustrates only a single pair of fixed and movable plates, those skilled in the art would realize that clutch 20 could include multiple pairs of such plates.

A typical torque verses clutch position function is illustrated in Figure 2. Clutch torque/position curve 80 is initially zero for a range of engagements before initial touch point 81. Clutch torque rises monotonically with increasing clutch engagement. In the example illustrated in Figure 2, clutch torque rises slowly at first and then more steeply until the maximum clutch torque is reached upon full engagement at point 82. The typical clutch design calls for the maximum clutch torque upon full engagement to be about 1.5 times the maximum engine torque. This ensures that clutch 20 can transfer the maximum torque produced by engine 10 without slipping.

Clutch actuator 27 is coupled to movable plate 23 for control of clutch 20 from disengagement through partial engagement to full engagement. Clutch actuator 27 may be an electrical, hydraulic or pneumatic actuator and may be position or pressure controlled. Clutch actuator 27 controls the degree of clutch engagement according to a clutch engagement signal from clutch actuation controller 60. In accordance with the preferred embodiment of this invention, clutch actuator 27 is a closed loop controller. Clutch actuator 27 controls the degree of clutch engagement to cause the measured clutch position from clutch position sensor 29 to follow the clutch engagement signal. The touch point determination preferably employs the measured clutch position from clutch position sensor 29. Those skilled in the art would realize that clutch actuator 27 may be pressure controlled by a clutch actuation signal corresponding to the desired clutch pressure and employ clutch pressure feedback measured by a clutch pressure sensor.

Transmission input speed sensor 31 senses the rotational velocity of transmission input shaft 25, which is the input to transmission 30. Transmission 30 provides selectable drive ratios to drive shaft 35 under the control of transmission shift controller 33. Drive shaft 35 is coupled to differential 40. Transmission output speed sensor 37 senses the rotational velocity of drive shaft 35. Transmission input speed sensor 31 and transmission output speed sensor 37 are preferably constructed in the same manner as engine speed sensor 13. In the preferred embodiment of the present invention, in which the motor vehicle is a large truck, differential 40 drives four axle shafts 41 to 44 that are in turn coupled to respective wheels 51 to 54.

Transmission shift controller 33 receives input signals from throttle 11, engine speed sensor 13, transmission input speed sensor 31 and transmission output speed sensor 37. Transmission shift controller 33 generates gear select signals for control of transmission 30 and clutch engage/disengage signals coupled to clutch actuation controller 60. Transmission shift controller 33 preferably changes the final gear ratio provided by transmission 30 corresponding to the throttle setting, engine speed, transmission input speed and transmission output speed. Transmission shift controller 33 provides respective engage and disengage signals to clutch actuation controller 60 depending on whether friction clutch 20 should be engaged or disengaged. Transmission shift controller also transmits a gear signal to clutch actuation controller 60. This gear signal permits recall of the set of coefficients corresponding to the selected gear.

Transmission shift controller 33 preferably briefly engages inertial brake 29 during upshifts. This slows the rotational speed of transmission input shaft 25 to match that of drive shaft 35 before engaging the higher gear. The touch point determination of this invention preferably employs inertial brake 29 in a manner that will be described below. Note transmission shift controller 33 forms no part of the present invention and will not be further described.

Clutch actuation controller 60 provides a clutch engagement signal to clutch actuator 27 for controlling the position of movable plate 23. This controls the amount of torque transferred by clutch 20 according to clutch torque/position curve 80 of Figure 2. Clutch actuation controller 60 operates under the control of transmission shift controller 33. Clutch actuation controller 60 controls the movement of moving plate 23 from disengagement to at least partial engagement or full engagement upon receipt of the engage signal from transmission shift controller 33. In the preferred embodiment it is contemplated that the clutch engagement signal will indicate a desired clutch position. Clutch actuator 27 preferably includes a closed loop control system employing the measured clutch position from clutch position sensor 29 for controlling movable plate 23 to this desired position. It is also feasible for the clutch engagement signal to represent a desired clutch pressure with clutch actuator 27 providing closed loop control to this desired pressure. Depending on the particular vehicle, it may be feasible for clutch actuator 27 to operate in an open loop fashion. The exact details of clutch actuator 27 are not crucial to this invention and will not be further discussed.

Clutch actuation controller 60 preferably generates a predetermined open loop clutch disengagement signal for a ramped out disengagement of clutch 20 upon receipt of the disengage signal from transmission shift controller 33. No adverse oscillatory responses are anticipated for this predetermined open loop disengagement of clutch 20.

The control function of clutch actuation controller 60 is needed only for clutch positions between touch point 81 and full engagement. Clutch engagement less than that corresponding to touch point 81 provide no possibility of torque transfer because clutch 20 is fully disengaged. The present invention is a manner of detection of the clutch position corresponding to touch point 81. Upon receipt of the engage signal from transmission shift controller 33, clutch actuation controller 60 preferably rapidly advances clutch 20 to a point corresponding to touch point 81. This sets the zero of the clutch engagement control at touch point 81. Thereafter the clutch engagement is controlled by the control function of clutch actuation controller 60.

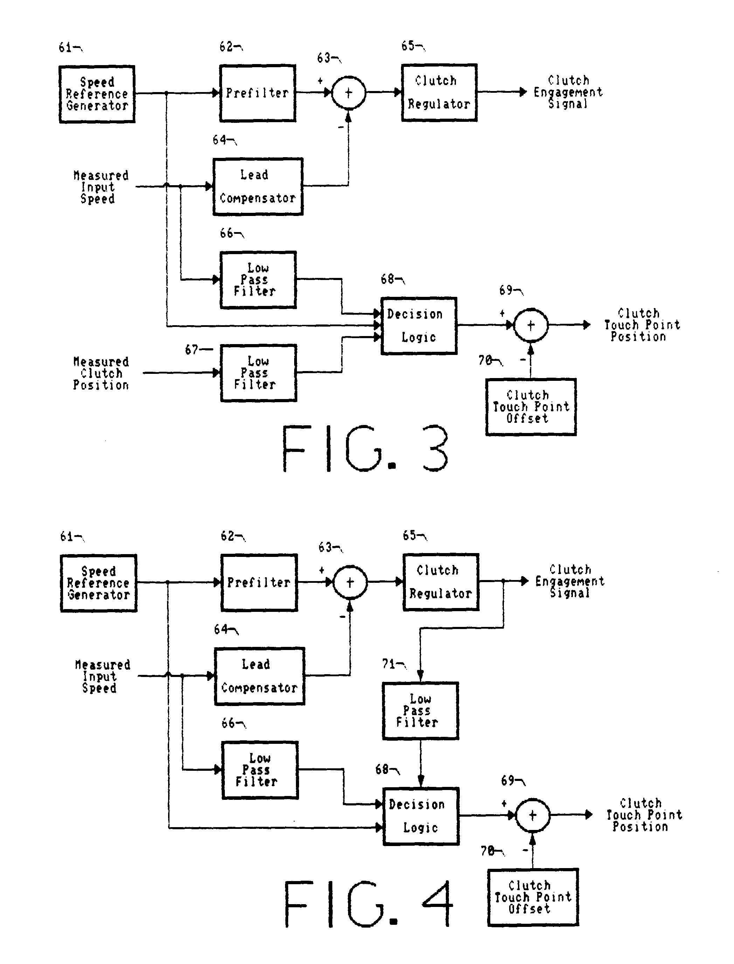

Figure 3 illustrates schematically the determination of the touch point for clutch 20. This process is preferably a subset of the control function of clutch actuation controller 60. Determination of the touch point involves putting transmission 30 in neutral and applying inertial brake 29. Clutch 20 is progressively engaged while engine 10 is idling until the transmission input speed reaches a predetermined fraction of the engine idle speed. This degree of clutch engagement, corresponding to point 83 of Figure 2, transfers torque through clutch 20 to overcome the slight braking torque of inertial brake 29. A small, fixed offset 85 is subtracted from this degree of clutch engagement to determine the touch point 81.

The touch point determination process begins with setting the proper initial conditions. These initial conditions include engine 10 idling, transmission 30 in neutral and inertial brake 29 engaged. Inertial brake 29 is normally present to aid in matching the rotational speed of transmission input shaft 25 to that of drive shaft 35 during upshifts. Because clutch 20 is disengaged during the shift the amount of braking needed is very small. Inertial brake 29 need only develop a braking torque of about 5% of the idling engine torque.

Speed reference generator 61 generates a reference speed signal. This reference speed signal should correspond to about 40% to 60% of the engine idle speed. This reference speed signal must be less than the engine idle speed because the touch point determination requires clutch slippage while engine 10 idles. The speed reference signal is filtered via prefilter 62. Prefilter 62 is provided to prevent the application of a step function speed reference signal to the control process.

An error speed signal is formed in algebraic summer 63. The error speed signal is the difference between the speed reference signal filtered by prefilter 62 minus a filtered input speed signal. Transmission input speed sensor 31 generates a transmission input speed signal corresponding to the rotational speed of the transmission input shaft 25. A lead compensator 64 filters the transmission input speed signal prior to formation of the difference.

The speed error signal drives clutch regulator 65, which produces a clutch engagement signal for application to clutch actuator 27. This is similar to operation of clutch actuation controller 60 during re-engagement of clutch 20 following transmission shifts. Clutch actuator 27 engages clutch 20 to a degree corresponding to the clutch actuation signal. Because the degree of clutch engagement determines the amount of torque coupled to transmission input shaft 25 and hence the measured transmission input speed, this forms a feedback system. Selection of the reference speed signal less than the engine idle speed ensures that clutch 20 slips when the speed error signal is driven to zero. The amount of torque required to overcome the braking torque of inertial brake 29 is so small that it does not stall engine 10.

Decision logic unit 68 makes the clutch touch point determination. Decision logic unit 68 receives the measured transmission input speed signal filtered via low pass filter 66. Decision logic unit 68 also receives the measured clutch position signal from clutch position sensor 29 filtered via low pass filter 67. Lastly, decision logic unit 68 receives the reference speed signal from speed reference generator 61. Decision logic unit 68 determines when a steady state is reached by comparing the filtered input speed signal with the reference speed signal. Steady state is defined as when the filtered input speed signal is within a predetermined fraction, such as 4%, of the reference speed signal. When this state is reached, decision logic unit 68 determines point 83 as the filtered measured clutch position signal.

A second algebraic summer 69 determines the clutch position for touch point 81. Clutch touch point offset generator 70 generates a clutch touch point offset signal corresponding to the distance 85 shown in Figure 2. This amount is fixed for a particular vehicle and depends upon the clutch torque/position curve 80 and the braking torque of inertial brake 29. In the preferred embodiment of this invention this clutch touch point offset signal is 6.8% of the full travel of clutch 20. Second algebraic summer 69 forms a clutch touch point signal corresponding to the difference between the filtered measured clutch position signal from decision logic unit 68 minus the clutch touch point offset signal.

Figure 4 illustrates an alternative embodiment of this invention. This alternative may be used when no measurement of the degree of clutch engagement is available. Low pass filter 71, which is similar to low pass filter 67 illustrated in Figure 3, filters the clutch engagement signal from clutch regulator 65. Since this signal will be available, and because clutch actuator 27 provides clutch engagement corresponding to this signal, it may be used as the measure of clutch engagement. Decision logic unit 68 determines when the filtered input speed signal is within 4% of the reference speed signal. When this state is reached, decision logic unit 68 determines point 83 as the filtered clutch engagement signal. Other portions of the embodiment of Figure 4 operate as previously described in conjunction with Figure 3.

Clutch actuation controller 60, including the determination of the clutch touch point, is preferably realized via a microcontroller circuit. Inputs corresponding to the engine speed, the transmission input speed, the throttle setting and clutch position must be in digital form. These input signals are preferably sampled at a rate consistent with the rate of operation of the microcontroller and fast enough to provide the desired control. As previously described, the engine speed, transmission input speed and transmission output speed are preferably detected via multitooth wheels whose teeth rotation is detected by magnetic sensors. The pulse trains detected by the magnetic sensors are counted during predetermined intervals. The respective counts are directly proportional to the measured speed. For proper control the sign of the transmission input speed signal must be negative if the vehicle is moving backwards. Some manner of detecting the direction of rotation of drive shaft 35 is needed. Such direction sensing is conventional and will not be further described. The throttle setting and clutch position are preferably detected via analog sensors such as potentiometers. These analog signals are digitized via an analog-to-digital converter for use by the microcontroller. The microcontroller executes the processes illustrated in Figures 3 and 4 by discrete difference equations in a manner known in the art. The control processes illustrated in Figure 3 and 4 should therefore be regarded as an indication of how to program the microcontroller embodying the invention rather than discrete hardware. It is feasible for the same microcontroller, if of sufficient capacity and properly programmed, to act as both clutch actuation controller 60, including the clutch point determination of this invention, and as transmission shift controller 33. It is believed that an Intel 80C196 microcontroller has sufficient computation capacity to serve in this manner.

As noted above, the elements of Figures 3 and 4 are preferably implemented via discrete difference equations in a microcontroller. The numerical values in the descrete difference equations are a function of the processor sampling rate. The particular values given below are based upon a sampling rate of 100KHz. A lower sampling rate is feasible, which would require different coefficient values to achieve the same filter response. Adjustment of these coefficients for the sampling rate is within the ordinary skill in the art. In the preferred embodiment the i-th value of the output $P_i$ of prefilter 62 is given by:

$$P_i = 0.98\ P_{i-1} + 0.02\ S_{ref} \tag{1}$$

where; $P_{i-1}$ is the immediately preceding value of the prefilter output; and $S_{ref}$ is the input reference speed signal. The i-th output $SComp_i$ of lead compensator 64 is preferably given by:

$$SComp_i = 0.63265\ SCOMP_{i-1} + 2.6327\ SIn_i - 2.2653\ SIn_{i-1} \tag{2}$$

where: $SComp_{i-1}$ is the prior value of the compensator output; $SIn_i$ is the current value of the transmission input speed signal; $SIn_{i-1}$ is the next preceding value of the transmission input speed signal. The i-th value of the clutch engagement signal $CEng_i$ generated by clutch regulator 65 is given by:

$$CEng_i = CEng_{i-1} + SErr_i - 0.98\ SErr_{i-1} \tag{3}$$

where: $CEng_{i-1}$ is the immediately preceding value of the clutch engagement signal; $SErr_i$ is the current value of the speed error signal; and $SErr_{i-1}$ is the immediately preceding value of the speed error signal. The i-th value of the filtered transmission input speed signal $SFil_i$ from low pass filter 66 is given by:

$$SFil_i = 1.7667\ SFil_{i-1} - 0.7866\ SFil_{i-2} + 0.02\ SIn_i \qquad (4)$$

where: $SFil_{i-1}$ is the immediately prior value of the filtered transmission input speed signal; and $SFil_{i-2}$ is the next prior value of the filtered transmission input speed signal. Lastly, the i-th value of the filtered measured clutch position signal $CFil_i$ is given by:

$$CFil_i = 0.98\ CFil^{i-1} + 0.02\ CPos_i \qquad (5)$$

where: $CFil^{i-1}$ is the immediately preceding value of the filtered measured clutch position signal.

This technique provides an advantageous determination of the touch point. This technique is based upon a measure of clutch engagement which transfers a known, small torque. Because the transmission is in the neutral position, there are no other torques applied to transmission input shaft 25 and thus no disturbing forces. By measuring the clutch engagement which transfers this known, small torque the touch point may be more reliably estimated than looking for the initial torque transfer point. The feedback system ensures that the degree of engagement that transfers this small torque is reliably reached. This cannot be done as easily at the initial torque transfer point. Additionally, the inertial brake and the clutch engagement sensor are generally already provided in the base system, thus no additional hardware is required.

## Claims

1. A clutch touch point determining apparatus including a source of motive power (10) having a predetermined idle speed, a friction clutch (20) for controllably transferring torque from the source of motive power (10) to a clutch output shaft (25), a multi-speed transmission (30) having an input shaft (25) connected to the clutch output shaft (25) and including a neutral position, at least one inertially-loaded traction wheel (51, 52, 53, 54) connected to the output shaft (25) via the multi-speed transmission (30), an automatic clutch controller (27, 60) for control of a degree of clutch engagement, and a touch point determinator comprising:

   a transmission input speed sensor (31) connected to the output shaft (25) of the friction clutch (20) for generating a transmission input speed signal corresponding to a rotational speed of the output shaft (25) of the friction clutch (20);
   an inertial brake (29) selectively engageable with the output shaft (25) of the friction clutch (20) for applying a predetermined braking torque to the output shaft (25) of the friction clutch (20);
   a clutch actuator (27) connected to the friction clutch (20) for controlling engagement of the friction clutch (20) from disengagement to fully engaged according to a clutch engagement signal; and
   a clutch engagement sensor (29) connected to the friction clutch (20) for generating a measured clutch engagement signal corresponding to the degree of engagement of the friction clutch (20); the touch point determinator characterized by a reference speed generator (61) for generating a reference speed signal that corresponds to a predetermined fraction of an idle speed of the source of motive power (10); and
   a controller (60) connected to said reference speed generator (61), said transmission input speed sensor (31), said inertial brake (29), said clutch actuator (27) and said clutch engagement sensor, the controller (60) including:

      an inertial brake engager for engaging said inertial brake (29) during touch point determination when the source of motive power (10) is idling and the multi-speed transmission (30) is in neutral,
      a first algebraic summer (63) connected to said reference speed generator (61) and said transmission input speed sensor (31) generating a first algebraic sum signal corresponding o the difference between (1) said reference speed signal and (2) said transmission input speed signal,
      a clutch regulator (65) connected to said first algebraic summer (63) for generating said clutch engagement signal for supplying to said clutch actuator (27) for engaging the friction clutch (20) to a degree to minimize said first algebraic sum signal, and
      a decision logic unit (68) connected to said reference speed generator (61), said transmission input speed sensor (31) and said clutch engagement sensor for setting a clutch touch point signal equal to a measure of clutch engagement if said transmission input speed signal is within a predetermined amount of said reference speed signal when said inertial brake (29) is engaged and the multi-speed transmission (30) is in the neutral position.

2. The touch point determining apparatus as claimed in claim 1, further characterized by:

said clutch engagement sensor formed of a clutch position sensor (29) generating a measured clutch position signal; and
said clutch actuator (27) controlling the position of the friction clutch (20) corresponding to a desired clutch position indicated by said clutch engagement signal;
said clutch regulator (65) generating said clutch engagement signal indicative of clutch position; and
said decision logic unit (68) generating said clutch touch point signal indicative of clutch position.

3. The touch point apparatus as claimed in claim 1, further characterized by:

said clutch engagement sensor formed of a clutch pressure sensor generating a clutch pressure signal;
said clutch actuator (27) controlling the pressure of the friction clutch (20) corresponding to a desired clutch pressure indicated by said clutch engagement signal;
said clutch regulator (65) generating said clutch engagement signal indicative of clutch pressure, and
said decision logic unit (68) generating said clutch touch point signal indicative of clutch pressure.

4. The touch point determining apparatus as claimed in claim 1, wherein said controller (60) is further characterized by:

a clutch engagement signal filter connected to said clutch engagement sensor for generating a filtered measured clutch engagement signal, and
said decision logic unit (68) sets said clutch touch point equal to said filtered measured clutch engagement signal when said transmission input speed signal is within a predetermined amount of said reference speed signal.

5. The touch point determining apparatus as claimed in claim 1, further characterized by:
said decision logic unit (68) of said controller (60) sets said clutch touch point equal to said clutch engagement signal when said transmission input speed signal is within said predetermined amount of said reference speed signal.

6. The touch point determining apparatus as claimed in claim 1, wherein said controller (60) is further characterized by:

a prefilter (62) connected to said reference speed generator (61) for generating a filtered reference speed signal;
a lead compensation filter (64) connected to said transmission input speed sensor (31) for generating a filtered transmission input speed signal, and
wherein said first algebraic summer (63) generates said first algebraic sum signal corresponding to the difference between (1) said filtered reference speed signal and (2) said filtered transmission input speed signal.

7. The touch point determining apparatus as claimed in claim 1, wherein said controller (60) is further characterized by:

a touch point offset generator (70) for generating a touch point offset signal, and
a second algebraic summer (69) connected to said decision logic unit (68) and said touch point offset generator for forming a corrected clutch touch point corresponding to the difference between (1) said clutch touch point signal and (2) said touch point offset signal.

8. The touch point determining apparatus as claimed in claim 1, further characterized by:
said reference speed generator (61) generating said reference speed signal within the range of 40% to 60% of said idle speed.

9. The touch point determining apparatus as claimed in claim 1, further characterized by:
said decision logic unit (68) of said controller (60) setting said clutch touch point equal to a measure of the clutch engagement when said transmission input speed signal is within said 2% of said reference speed signal.

**10.** A method of determining the touch point of the friction clutch (20) including the steps of:

operating a source of motive power (10) at idle speed;
selecting the neutral position of a multi-speed transmission (30) operatively connected to said source of motive power (10);
applying a predetermined braking torque to an output shaft (25) of the friction clutch (20);
sensing a rotational speed of the output shaft (25) of the friction clutch (20); the method characterized by:
first generating a reference speed signal less than the idle speed;
then forming a difference speed between said reference speed signal and the sensed rotational speed of the output shaft (25) of the friction clutch (20);
then engaging the friction clutch (20) to a degree to minimize said difference speed; and
then determining the clutch touch point signal corresponding to the degree of clutch engagement if the sensed rotational speed of the output shaft (25) of the friction clutch (20) is within a predetermined amount of the reference speed signal.

**11.** The method of determining the touch point of the friction clutch (20) as claimed in claim 10, further characterized in the steps of:

filtering the reference speed signal;
then filtering the sensed rotational speed of the output shaft (25) of the friction clutch (20); and
wherein said step of forming the difference speed includes forming the difference between the filtered reference speed signal and the filtered sensed rotational speed of the output shaft (25) of the friction clutch (20).

**12.** The method of determining the touch point of the friction clutch (20) as claimed in claim 10, further characterized in the steps of:

sensing the degree of clutch engagement; and
wherein said step of determining the clutch touch point signal sets the clutch touch point signal equal to the sensed degree of clutch engagement when the sensed rotational speed of the output shaft (25) of the friction clutch (20) is within a predetermined amount of the reference speed signal.

**13.** The method of determining the touch point of the friction clutch (20) as claimed in claim 12, wherein:

said step of sensing the degree of clutch engagement includes measuring the position of the friction clutch (20); and
then said step of determining the cluth touch point signal includes setting the clutch touch point signal equal to the measured clutch position when the sensed rotational speed of the output shaft (25) of the friction clutch (20) is within a predetermined amount of the reference speed signal.

**14.** The method of determining the touch point of the friction clutch (20) as claimed in claim 12, wherein:

said step of sensing the degree of clutch engagement consists of measuring the pressure of the friction clutch (20); and
then said step of determining the clutch touch point signal sets the clutch touch point signal equal to the measured clutch pressure when the sensed rotational speed of the output shaft (25) of the friction clutch (20) is within a predetermined amount of the reference speed signal.

**15.** The method of determining the touch point of the friction clutch (20) as claimed in claim 10, wherein:

said step of engaging the friction clutch (20) to a degree to minimize said difference speed includes the steps of:
generating a clutch engagement signal corresponding to said difference speed, and
then engaging the friction clutch (20) to a degree corresponding to said clutch engagement signal; and
then said step of determining the clutch touch point signal setting the clutch touch point signal equal to said clutch engagement signal when the sensed rotational speed of the output shaft (25) of the friction clutch (20) is within a predetermined amount of the reference speed signal.

**16.** The method of determining the touch point of the friction clutch (20) as claimed in claim 10, further comprising the steps of:

filtering the sensed degree of clutch engagement; and
wherein said step of determining the clutch touch point signal sets the clutch touch point signal equal to the filtered sensed degree of clutch engagement when the sensed rotational speed of the output shaft (25) of the friction clutch (20) is within a predetermined amount of the reference speed signal.

17. The method of determining the touch point of the friction clutch (20) as claimed in claim 10, further comprising the steps of:

generating a touch point offset signal corresponding to the differences in clutch engagement between the clutch engagement when the friction clutch (20) transfers said predetermined torque and when the friction clutch (20) transfers just more than zero torque; and
then forming a corrected clutch touch point corresponding to the difference between (1) said clutch touch point signal and (2) said touch point offset signal.

18. The method of determining the touch point of the friction clutch (20) as claimed in claim 10, wherein:
said reference speed signal is within the range of 40% to 60% of the idle speed.

19. The method of determining the touch point of the friction clutch (20) as claimed in claim 10, wherein:
said step of determining the clutch touch point signal sets the clutch touch point corresponding to the degree of clutch engagement if the sensed rotational speed of the output shaft (25) of the friction clutch (20) is within 4% of the reference speed signal.

**Patentansprüche**

1. Vorrichtung zur Bestimmung des Berührpunktes einer Kupplung, mit einer Antriebsleistungsquelle (10), die eine vorbestimmte Leerlaufdrehzahl aufweist, mit einer Reibungskupplung (20) zur kontrollierten Übertragung von Drehmoment von der Antriebsleistungsquelle (10) auf eine Kupplungsausgangswelle (25), mit einem vielgängigen Getriebe (30), das eine mit der Kupplungsausgangswelle (25) verbundene Eingangswelle (25) aufweist und eine Leerlaufposition enthält, mit wenigstens einem trägheitsbehafteten Antriebsrad (51, 52, 53, 54), das über das vielgängige Getriebe (30) mit der Ausgangswelle (25) verbunden ist, mit einer automatischen Kupplungssteuerung (27, 60) zur Steuerung des Maßes des Kupplungseingriffs und mit einer Bestimmungseinrichtung für den Berührungspunkt, die aufweist:

einen Drehzahlsensor (31) für die Getriebeeingangswelle, der mit der Ausgangswelle (25) der Reibungskupplung (20) verbunden ist, zur Erzeugung eines Getriebedrehzahleingangssignales, das einer Drehzahl der Ausgangswelle (25) der Reibungskupplung (20) entspricht;

eine Eingangswellenbremse (29), die wahlweise mit der Ausgangswelle (25) der Reibungskupplung (20) in Eingriff bringbar ist, um ein vorbestimmtes Bremsmoment auf die Ausgangswelle (25) der Reibungskupplung (20) auszuüben;

einen Kupplungsaktuator (27), der mit der Reibungskupplung (20) verbunden ist, um das Einrücken der Reibungskupplung (20) entsprechend einem Kupplungseinrücksignal vom getrennten bis zum vollkommen eingerückten Zustand zu steuern, und

einen Kupplungseinrücksensor (29), der mit der Reibungskupplung (20) verbunden ist, um ein gemessenes Kupplungseinrücksignal zu erzeugen, das dem Kupplungsgrad der Reibungskupplung (20) entspricht, wobei die Vorrichtung zur Bestimmung des Anlagepunktes gekennzeichnet ist durch einen Referenzdrehzahlgenerator (61) zur Erzeugung eines Drehzahlvergleichssignales, das einem vorbestimmten Bruchteil einer Leerlaufdrehzahl der Antriebsleistungsquelle (10) entspricht, und

eine Steuerung (60), die mit dem Referenzdrehzahlgenerator (61), dem Getriebeeingangsdrehzahlsensor (31), der Eingangswellenbremse (29), dem Kupplungsaktuator (27) und dem Kupplungseinrücksensor verbunden ist, wobei die Steuerung (60) aufweist:

einen Einrücker für die Eingangswellenbremse, um die Eingangswellenbremse (29) bei der Bestimmung des Anlage- oder Berührpunktes zu betätigen, wenn die Antriebsleistungsquelle (10) im Leerlauf läuft und das vielgängige Getriebe (30) im Leergang befindlich ist,

einen ersten algebraischen Addierer (63), der mit dem Referenzdrehzahlgenerator (61) und dem Getriebeeingangsdrehzahlsensor (31) verbunden ist und der ein erstes, eine algebraische Summe kennzeichnendes Signal erzeugt, das der Differenz zwischen (1) dem Vergleichsdrehzahlsignal und (2) dem Getriebeeingangsdrehzahlsignal entspricht,

einen Kupplungsregler (65), der mit dem ersten algebraischen Addierer (63) verbunden ist, um das Kupplungseinrücksignal zur Weiterleitung an den Kupplungaktuator (27) zu erzeugen, um die Reibungskupplung (20) zu einem gewissen Maß einzurücken, um das erste algebraische Summensignal zu minimieren, und

eine logische Entscheidungseinheit (68), die mit dem Referenzdrehzahlgenerator (61), dem Getriebeeingangsdrehzahlsensor (31) und dem Kupplungseinrücksensor verbunden ist, um ein Kupplungsberührpunktsignal festzulegen, das gleich einem Kupplungseinrückmaß ist, wenn das Getriebeeingangsdrehzahlsignal innerhalb eines vorbestimmten Bereiches des Drehzahlvergleichssignales liegt, wenn die Eingangswellenbremse (29) eingerückt und das vielgängige Getriebe (30) im Leergang befindlich ist.

2. Vorrichtung zur Bestimmung des Berührpunktes nach Anspruch 1, dadurch gekennzeichnet:

daß der Kupplungseinrücksensor durch einen Kupplungspositionssensor (29) gebildet ist, der ein Signal für die gemessene Kupplungsposition abgibt, und

daß der Kupplungsaktuator (27) die Position der Reibungskupplung (20) entsprechend einer gewünschten Kupplungsposition steuert, die durch das Kupplungseinrücksignal gekennzeichnet ist,

daß der Kupplungsregler (65) das die Kupplungsposition kennzeichnende Kupplungseinrücksignal erzeugt und

daß die logische Entscheidungseinheit (68) das die Kupplungsposition kennzeichnende Signal für den Kupplungsberührpunkt erzeugt.

3. Vorrichtung zur Bestimmung des Berührpunktes nach Anspruch 1, dadurch gekennzeichnet:

daß der Kupplungseinrücksensor von einem ein Kupplungsdrucksignal erzeugenden Kupplungsdrucksensor gebildet ist,

daß der Kupplungsaktuator (27) den Druck der Reibungskupplung (20) entsprechend einem gewünschten, durch das Kupplungseinrücksignal gekennzeichneten Kupplungsdruck steuert,

daß der Kupplungsregler (65) das für den Kupplungsdruck kennzeichnende Kupplungseinrücksignal erzeugt und

daß die logische Entscheidungseinheit (68) das für den Kupplungsdruck kennzeichnende Signal für den Kupplungsberührpunkt erzeugt.

4. Vorrichtung zur Bestimmung des Berührpunktes nach Anspruch 1, bei der die Steuerung (60) weiter gekennzeichnet ist durch:

ein Filter für das Kupplungseinrücksignal, das mit dem Kupplungseinrücksensor verbunden ist, um ein gefiltertes Kupplungseinrück-Meßsignal zu erzeugen, sowie dadurch,

daß die logische Entscheidungseinheit (68) den Kupplungsberührpunkt auf das gefilterte Meßsignal für das Kupplungseinrücken festlegt, wenn das Getriebeeingangsdrehzahlsignal innerhalb eines vorbestimmten Bereiches des Drehzahlvergleichssignales liegt.

5. Vorrichtung zur Bestimmung des Berührpunktes nach Anspruch 1, weiter dadurch gekennzeichnet:
daß die logische Entscheidungseinheit (68) der Steuerung (60) das Kupplungsberührpunktsignal gleich dem Kupplungseinrücksignal setzt, wenn das Getriebeeingangsdrehzahlsignal innerhalb eines vorbestimmten Bereiches des Vergleichsdrehzahlsignales liegt.

6.  Vorrichtung zur Bestimmung des Berührpunktes nach Anspruch 1, bei der die Steuerung (60) außerdem gekennzeichnet ist durch:

    ein Vorfilter (62), das mit dem Referenzdrehzahlgenerator (61) verbunden ist, um ein gefiltertes Drehzahlvergleichssignal zu erzeugen,

    ein Leitungskompensationsfilter (64), das mit dem Getriebeeingangsdrehzahlsensor (31) verbunden ist, um ein gefiltertes Getriebeeingangsdrehzahlsignal zu erzeugen, und

    wobei der erste algebraische Addierer (63) das erste, einer algebraischen Summe entsprechende Signal erzeugt, das der Differenz zwischen (1) dem gefilterten Drehzahlvergleichssignal und (2) dem gefilterten Getriebeeingangsdrehzahlsignal entspricht.

7.  Vorrichtung zur Bestimmung des Berührpunktes nach Anspruch 1, bei der die Steuerung (60) außerdem gekennzeichnet ist durch:

    einen Offsetgenerator (70) für den Berührpunkt zur Erzeugung eines Berührpunktoffsetsignales und

    einen zweiten algebraischen Addierer (69), der mit der logischen Entscheidungseinheit (68) und dem Berührpunktoffsetgenerator verbunden ist, um einen korrigierten Kupplungsberührpunkt zu bilden, der der Differenz zwischen (1) dem Kupplungsberührpunktsignal und (2) dem Berührpunktoffsetsignal entspricht.

8.  Vorrichtung zur Bestimmung des Berührpunktes nach Anspruch 1, außerdem dadurch gekennzeichnet:
    daß der Referenzdrehzahlgenerator (61) das Drehzahlvergleichssignal innerhalb des Bereiches von 40% bis 60% der Leerlaufdrehzahl erzeugt.

9.  Vorrichtung zur Bestimmung des Berührpunktes nach Anspruch 1, außerdem dadurch gekennzeichnet:
    daß die logische Entscheidungseinheit (68) der Steuerung (60) den Kupplungsberührpunkt gleich einem Teil der Einrückposition der Kupplung setzt, wenn das Getriebeeingangsdrehzahlsignal innerhalb der 2% des Drehzahlvergleichssignales liegt.

10. Verfahren zur Bestimmung des Berührpunktes der Reibungskupplung (20) mit den folgenden Schritten:

    Betreiben einer Antriebsleistungsquelle (10) mit Leerlaufdrehzahl,

    Auswählen der Leerlaufposition eines vielgängigen Getriebes (30), das betriebsmäßig mit der Antriebsleistungsquelle (10) verbunden ist,

    Beaufschlagen einer Ausgangswelle (25) der Reibungskupplung (20) mit einem vorbestimmten Bremsdrehmoment,

    Erfassen einer Drehzahl der Ausgangswelle (25) der Reibungskupplung (20), wobei das Verfahren dadurch gekennzeichnet ist:

    daß zuerst ein Vergleichssignal für eine Drehzahl erzeugt wird, die geringer ist als die Leerlaufdrehzahl,

    daß eine Differenzdrehzahl zwischen dem Drehzahlvergleichssignal und der erfaßten Drehzahl der Ausgangswelle (25) der Reibungskupplung (20) gebildet wird,

    daß dann die Reibungskupplung (20) bis zu einem solchen Maß eingerückt wird, daß die Differenzdrehzahl minimiert wird, und

    daß dann das Kupplungsberührpunktsignal dem Maß des Kupplungseinrückens entsprechend festgelegt wird, wenn die erfaßte Drehzahl der Ausgangswelle (25) der Reibungskupplung (20) innerhalb eines vorbestimmten Bereiches des Drehzahlvergleichssignales liegt.

**11.** Verfahren zur Bestimmung des Berührpunktes der Reibungskupplung (20) nach Anspruch 10, außerdem gekennzeichnet durch die folgenden Schritte:

Filterung des Drehzahlvergleichssignales,

Filterung der erfaßten Drehzahl der Ausgangswelle (25) der Reibungskupplung (20),

wobei zu dem Schritt der Bildung der Differenzdrehzahl gehört, daß die Differenz zwischen dem gefilterten Drehzahlvergleichssignal und der gefilterten erfaßten Drehzahl der Ausgangswelle (25) der Reibungskupplung (20) gebildet wird.

**12.** Verfahren zur Bestimmung des Berührpunktes der Reibungskupplung (20) nach Anspruch 10, außerdem gekennzeichnet durch die folgenden Schritte:

Erfassen des Maßes des Kupplungseinrückens,

wobei der Schritt der Bestimmung des Kupplungsberührpunktsignales das Kupplungsberührpunktsignal gleich dem erfaßten Maß des Kupplungseinrückens setzt, wenn das erfaßte Drehzahlsignal der Ausgangswelle (25) der Reibungskupplung (20) innerhalb eines vorbestimmten Bereiches des Drehzahlvergleichssignales liegt.

**13.** Verfahren zur Bestimmung des Berührpunktes der Reibungskupplung (20) nach Anspruch 10, bei dem:

der Schritt der Erfassung des Maßes des Kupplungseinrückens beinhaltet, daß die Position der Reibungskupplung (20) gemessen wird, und

daß dann der Schritt der Bestimmung des Kupplungsberührpunktsignales beinhaltet, daß das Kupplungsberührpunktsignal gleich der gemessenen Kupplungsposition gesetzt wird, wenn die erfaßte Drehzahl der Ausgangswelle (25) der Reibungskupplung (20) innerhalb eines vorbestimmten Bereiches des Drehzahlreferenzsignales liegt.

**14.** Verfahren zur Bestimmung des Berührpunktes der Reibungskupplung (20) nach Anspruch 12, bei dem

der Schritt der Erfassung des Maßes des Kupplungseinrückens darin besteht, daß der Druck der Reibungskupplung (20) gemessen wird und

der Schritt der Bestimmung des Kupplungsberührpunktsignales dann das Kupplungsberührpunktsignal gleich dem gemessenen Kupplungdruck setzt, wenn die erfaßte Drehzahl der Ausgangswelle (25) der Reibungskupplung (20) innerhalb eines vorbestimmten Bereiches des Drehzahlvergleichssignales liegt.

**15.** Verfahren zur Bestimmung des Berührpunktes der Reibungskupplung (20) nach Anspruch 10, bei dem

der Schritt des graduellen Einrückens der Reibungskupplung (20) zur Minimierung der Differenzdrehzahl die Schritte enthält:

daß ein der Differenzdrehzahl entsprechendes Kupplungseinrücksignal erzeugt wird und

daß die Reibungskupplung (20) dann bis zu einem gewissen Grad eingerückt wird, der dem Kupplungseinrücksignal entspricht, und

daß der Schritt der Bestimmung des Kupplungsberührpunktsignales dann das Kupplungsberührpunktsignal gleich dem Kupplungseinrücksignal setzt, wenn die erfaßte Drehzahl der Ausgangswelle (25) der Reibungskupplung (20) innerhalb eines vorbestimmten Bereiches des Drehzahlvergleichssignales liegt.

**16.** Verfahren zur Bestimmung des Berührpunktes der Reibungskupplung (20) nach Anspruch 10, das außerdem die Schritte aufweist:

daß das erfaßte Maß des Kupplungseinrückens gefiltert wird, wobei

der Schritt des Bestimmens des Kupplungsberührpunktsignales das Kupplungsberührpunktsignal gleich dem gefilterten erfaßten Maß des Kupplungseinrückens setzt, wenn die erfaßte Drehzahl der Ausgangswelle (25) der Reibungskupplung (20) innerhalb eines vorbestimmten Bereiches des Drehzahlvergleichssignales liegt.

**17.** Verfahren zur Bestimmung des Berührpunktes der Reibungskupplung (20) nach Anspruch 10, das außerdem die Schritte aufweist:

daß ein Berührpunktoffsetsignal erzeugt wird, das den Abweichungen des Kupplungseinrückens zu dem Kupplungseinrücksignal entspricht, wenn die Reibungskupplung (20) das vorbestimmte Drehmoment überträgt und wenn die Reibungskupplung (20) gerade ein von Null verschiedenes Drehmoment überträgt, und

daß dann ein berichtigtes Kupplungsberührpunktsignal gebildet wird, das der Differenz zwischen (1) dem Kupplungsberührpunktsignal und (2) dem Berührpunktoffsetsignal entspricht.

**18.** Verfahren zur Bestimmung des Berührpunktes der Reibungskupplung (20) nach Anspruch 10, bei dem:
das Drehzahlvergleichssignal innerhalb des Bereiches von 40% bis 60% der Leerlaufdrehzahl liegt.

**19.** Verfahren zur Bestimmung des Berührpunktes der Reibungskupplung (20) nach Anspruch 10, bei dem:
der Schritt der Bestimmung des Kupplungsberührpunktsignales den Kupplungsberührpunkt entsprechend dem Grad des Kupplungseinrückens festsetzt, wenn die erfaßte Drehzahl der Ausgangswelle (25) der Reibungskupplung (20) innerhalb von 4% des Drehzahlvergleichssignales liegt.

## Revendications

**1.** Dispositif de détermination du point de contact d'un embrayage, comprenant une source de puissance motrice (10) ayant une vitesse prédéterminée à vide, un embrayage à friction (20) pour transférer un couple, de manière contrôlable, depuis la source de puissance motrice (10) à un arbre de sortie d'embrayage (25), une transmission à vitesses multiples (30) ayant un arbre d'entrée (25) connecté à l'arbre de sortie d'embrayage (25) et comprenant une position de point mort, au moins une roue de traction chargée par inertie (51, 52, 53, 54) connectée à l'arbre de sortie (25) par l'intermédiaire de la transmission à vitesses multiples (30), un contrôleur d'embrayage automatique (27, 60) pour contrôler un degré de prise de l'embrayage, et un déterminateur de point de contact comprenant :

un capteur de vitesse d'entrée de transmission (31) connecté à l'arbre de sortie (25) de l'embrayage à friction (20) pour générer un signal de vitesse d'entrée de transmission correspondant à la vitesse de rotation de l'arbre de sortie (25) de l'embrayage à friction (20) ;
un frein inertiel (29) pouvant être mis sélectivement en prise avec l'arbre de sortie (25) de l'embrayage à friction (20) pour appliquer un couple de freinage prédéterminé à l'arbre de sortie (25) de l'embrayage à friction (20) ;
un actionneur d'embrayage (27), connecté à l'embrayage à friction (20) pour contrôler la prise de l'embrayage à friction (20), entre une position hors de prise et une position de prise complète, selon le signal de prise d'embrayage ; et
un capteur de prise d'embrayage (29) connecté à l'embrayage à friction (20) pour générer un signal de prise d'embrayage mesuré correspondant au degré de prise de l'embrayage à friction (20) ; le déterminateur de point de contact étant caractérisé par un générateur de vitesse de référence (61) pour générer un signal de vitesse de référence qui correspond à une fraction prédéterminée d'une vitesse à vide de la source de puissance motrice (10) ; et
un contrôleur (60) connecté audit générateur de vitesse de référence (61), audit capteur de vitesse d'entrée de transmission (31), audit frein inertiel (29), audit actionneur d'embrayage (27) et audit capteur de prise d'embrayage, le contrôleur comprenant :
une commande de frein inertiel pour mettre en prise ledit frein inertiel (29) pendant la détermination du point de contact lorsque la source de puissance motrice (10) est à vide et que la transmission à vitesses multiples (30) est en position de point mort,
un premier sommateur algébrique (63) connecté audit générateur de vitesse de référence (61) et audit capteur de vitesse d'entrée de transmission (31) générant un premier signal de somme algébrique correspondant à la différence entre (1) ledit signal de vitesse de référence et (2) ledit signal de vitesse d'entrée de transmission,
un régulateur d'embrayage (65) connecté audit premier sommateur algébrique (63), pour générer ledit signal de prise d'embrayage à délivrer audit actionneur d'embrayage (27), afin de mettre en prise l'embrayage à friction (20) dans une mesure propre à minimiser ledit premier signal de somme algébrique, et

une unité logique de décision (68) connectée audit générateur de vitesse de référence (61), audit capteur de vitesse d'entrée de transmission (31) et audit capteur de prise d'embrayage pour définir un signal de point de contact d'embrayage égal à une mesure de la prise d'embrayage si ledit signal de vitesse d'entrée de transmission est compris dans une plage prédéterminée autour dudit signal de vitesse de référence lorsque ledit frein inertiel (29) est en prise et que la transmission à vitesses multiples (30) est dans la position de point mort.

2. Dispositif de détermination du point de contact selon la revendication 1, caractérisé en ce que :

ledit capteur de prise d'embrayage est formé d'un capteur de position d'embrayage (29) générant un signal de position d'embrayage mesurée ; et
ledit actionneur d'embrayage (27) contrôle la position de l'embrayage à friction (20) correspondant à une position d'embrayage désirée indiquée par ledit signal de prise d'embrayage ;
ledit régulateur d'embrayage (65) génère ledit signal de prise d'embrayage représentatif de la position de l'embrayage ; et
ladite unité de décision logique (68) génère ledit signal de point de contact d'embrayage représentatif de la position de l'embrayage.

3. Dispositif de détermination du point de contact selon la revendication 1, caractérisé en ce que :

ledit capteur de prise d'embrayage est formé d'un capteur de pression d'embrayage générant un signal de pression d'embrayage ;
ledit actionneur d'embrayage (27) contrôle la pression de l'embrayage à friction (20) correspondant à une pression d'embrayage désirée indiquée par ledit signal de prise d'embrayage ;
ledit régulateur d'embrayage (65) génère ledit signal de prise d'embrayage représentatif de la pression de l'embrayage ; et
ladite unité de décision logique (68) génère ledit signal de point de contact d'embrayage représentatif de la pression de l'embrayage.

4. Dispositif de détermination du point de contact selon la revendication 1, dans lequel ledit contrôleur (60) est de plus caractérisé par :

un filtre de signal de prise d'embrayage connecté audit capteur de prise d'embrayage pour générer un signal de prise d'embrayage mesuré filtré, et
ladite unité logique de décision (68) fixe ledit point de contact d'embrayage de manière telle qu'il soit égal audit signal de prise d'embrayage mesuré filtré lorsque ledit signal de vitesse d'entrée de transmission est compris dans une plage prédéterminée autour dudit signal de vitesse de référence.

5. Dispositif de détermination du point de contact selon la revendication 1, caractérisé en ce que ladite unité logique de décision (68) dudit contrôleur (60) fixe ledit point de contact d'embrayage de manière telle qu'il soit égal audit signal de prise d'embrayage lorsque ledit signal de vitesse d'entrée de transmission est compris dans une plage prédéterminée autour dudit signal de vitesse de référence.

6. Dispositif de détermination du point de contact selon la revendication 1, dans lequel ledit contrôleur (60) est caractérisé par :

un préfiltre (62) connecté audit générateur de vitesse de référence (61) pour générer un signal de vitesse de référence filtré ;
un filtre compensateur de conduite (64) connecté audit capteur de vitesse d'entrée de transmission (31) pour générer un signal de vitesse d'entrée de transmission filtré,
ledit premier sommateur algébrique (63) générant ledit premier signal de somme algébrique correspondant à la différence entre (1) ledit signal de vitesse de référence filtré et (2) ledit signal de vitesse d'entrée de transmission filtré.

7. Dispositif de détermination du point de contact selon la revendication 1, dans lequel ledit contrôleur (60) est caractérisé par :

un générateur de décalage de point de contact (70) pour générer un signal de décalage de point de contact, et
un deuxième sommateur algébrique (69) connecté à ladite unité logique de décision (68) et audit générateur de décalage de point de contact pour former un point de contact d'embrayage corrigé correspondant à la différence entre (1) ledit signal de point de contact d'embrayage et (2) ledit signal de décalage de point de contact.

8. Dispositif de détermination du point de contact selon la revendication 1, caractérisé en ce que ledit générateur de vitesse de référence (61) génère ledit signal de vitesse de référence dans la plage de 40% à 60% de ladite vitesse à vide.

9. Dispositif de détermination du point de contact selon la revendication 1, caractérisé en ce que ladite unité logique de décision (68) dudit contrôleur (60) fixe ledit point de contact de l'embrayage égale à une mesure de la prise d'embrayage lorsque ledit signal de vitesse d'entrée de transmission est dans lesdits 2% dudit signal de vitesse de référence.

10. Procédé de détermination du point de contact de l'embrayage à friction (20), comprenant les étapes consistant à :

faire fonctionner une source de puissance motrice (10) à la vitesse à vide ;
sélectionner la position de point mort d'une transmission à vitesses multiples (30) connectée de manière opérationnelle à ladite source de puissance motrice (10) ;
appliquer un couple de freinage prédéterminé à un arbre de sortie (25) de l'embrayage à friction (20) ;
détecter une vitesse de rotation de l'arbre de sortie (25) de l'embrayage à friction (20) ; le procédé étant caractérisé par le fait de :
générer d'abord un signal de vitesse de référence inférieure à la vitesse à vide ;
former ensuite une différence de vitesse entre ledit signal de vitesse de référence et la vitesse de rotation détectée de l'arbre de sortie (25) de l'embrayage à friction (20) ;
mettre alors en prise l'embrayage à friction (20) dans une mesure apte à minimiser ladite différence de vitesse ; et
déterminer ensuite le signal de point de contact de l'embrayage correspondant au degré de prise de l'embrayage si la vitesse de rotation détectée de l'arbre de sortie (25) de l'embrayage à friction (20) se trouve compris dans une plage déterminée autour du signal de vitesse de référence.

11. Procédé de détermination du point de contact de l'embrayage à friction (20) selon la revendication 10, caractérisé par les étapes consistant à :

filtrer le signal de vitesse de référence ;
filtrer ensuite la vitesse de rotation détectée de l'arbre de sortie (25) de l'embrayage à friction (20) ; et
dans lequel ladite étape consistant à former la différence de vitesse comprend le fait de former la différence entre le signal de vitesse de référence filtrée et la vitesse de rotation détectée filtrée de l'arbre de sortie (25) de l'embrayage à friction (20).

12. Procédé de détermination du point de contact de l'embrayage à friction (20) selon la revendication 10, caractérisé par les étapes consistant à :

détecter le degré de prise de l'embrayage ; et
dans lequel ladite étape consistant à déterminer le signal de point de contact de l'embrayage détermine le signal de point de contact de l'embrayage de manière à ce qu'il soit égal au degré détecté de prise de l'embrayage lorsque la vitesse de rotation détectée de l'arbre de sortie (25) de l'embrayage à friction (20) se trouve dans une plage prédéterminée autour du signal de vitesse de référence.

13. Procédé de détermination du point de contact de l'embrayage à friction (20) selon la revendication 12, dans lequel

ladite étape consistant à détecter le degré de prise de l'embrayage comprend le fait de mesurer la position de l'embrayage à friction (20) ; et, ensuite,
ladite étape consistant à déterminer le signal de point de contact de l'embrayage comprend le fait de fixer le signal de point de contact de l'embrayage de manière à ce qu'il soit égal à la position d'embrayage mesurée lorsque la vitesse de rotation détectée de l'arbre de sortie (25) de l'embrayage à friction (20) se trouve dans une plage prédéterminée autour du signal de vitesse de référence.

14. Procédé de détermination du point de contact de l'embrayage à friction (20) selon la revendication 12, dans lequel

ladite étape consistant à détecter le degré de prise de l'embrayage comprend le fait de mesurer la pression de l'embrayage à friction (20) ; et, ensuite,

ladite étape consistant à déterminer le signal de point de contact de l'embrayage détermine le signal de point de contact de l'embrayage de manière à ce qu'il soit égal à la pression d'embrayage mesurée lorsque la vitesse de rotation détectée de l'arbre de sortie (25) de l'embrayage à friction (20) se trouve dans une plage prédéterminée autour du signal de vitesse de référence.

15. Procédé de détermination du point de contact de l'embrayage à friction (20) selon la revendication 10, dans lequel

ladite étape consistant à mettre en prise l'embrayage à friction (20) dans une mesure apte à minimiser ladite différence de vitesse comprend les étapes consistant à :

générer un signal de prise d'embrayage correspondant à ladite différence de vitesse ; et, ensuite,

mettre en prise l'embrayage à friction (20) d'une mesure correspondant audit signal de prise d'embrayage ; et, alors,

ladite étape consistant à déterminer le signal de point de contact de l'embrayage fixe le signal de point de contact de l'embrayage de manière à ce qu'il soit égal audit signal de prise de l'embrayage lorsque la vitesse de rotation détectée de l'arbre de sortie (25) de l'embrayage à friction (20) se trouve dans une plage prédéterminée autour du signal de vitesse de référence.

16. Procédé de détermination du point de contact de l'embrayage à friction (20) selon la revendication 10, comprenant de plus les étapes consistant à :

filtrer le degré détecté de prise de l'embrayage ; et

dans lequel ladite étape consistant à déterminer le signal de point de contact de l'embrayage fixe le signal de point de contact, de l'embrayage de manière à ce qu'il soit égal au degré détecté filtre de prise de l'embrayage lorsque la vitesse de rotation détectée de l'arbre de sortie (25) de l'embrayage à friction (20) se trouve dans une plage prédéterminée autour du signal de vitesse de référence.

17. Procédé de détermination du point de contact de l'embrayage à friction (20) selon la revendication 10, comprenant de plus les étapes consistant à :

générer un signal de décalage de point de contact correspondant aux différences de prise de l'embrayage entre la prise de l'embrayage lorsque l'embrayage à friction (20) transmet ledit couple prédéterminé et lorsque l'embrayage à friction (20) transmet juste plus qu'un couple nul ; et

former ensuite un point de contact d'embrayage corrigé correspondant à la différence entre (1) ledit signal de point de contact d'embrayage et (2) ledit signal de décalage de point de contact.

18. Procédé de détermination du point de contact de l'embrayage à friction (20) selon la revendication 10, dans lequel ledit signal de vitesse de référence est compris entre 40% et 60% de la vitesse à vide.

19. Procédé de détermination du point de contact de l'embrayage à friction (20) selon la revendication 10, dans lequel ladite étape consistant à déterminer le signal de point de contact de l'embrayage fixe le point de contact de l'embrayage d'une manière correspondant au degré de prise de l'embrayage si la vitesse de rotation détectée de l'arbre de sortie (25) dudit embrayage à friction (20) est comprise dans une plage de 4% autour du signal de vitesse de référence.

FIG. 1

FIG. 2

FIG. 3

FIG. 4

18